# EUROPÄISCHE PATENTSCHRIFT

(11) **EP 2 046 856 B1**
(45) Veröffentlichungstag und Bekanntmachung des Hinweises auf die Patenterteilung: **01.02.2012**
(21) Anmeldenummer: 07802380.1
(22) Anmeldetag: 18.07.2007
(51) Int. Cl.: C08G 18/50, C08G 18/66, B29C 37/00

(54) **EMISSIONSARME TRÄGERSCHICHT AUS POLYURETHAN, SPRÜHPOLYURETHANSYSTEM ZUR HERSTELLUNG EINER SOLCHEN TRÄGERSCHICHT UND VERWENDUNG EINER SOLCHEN TRÄGERSCHICHT**
LOW-EMISSION POLYURETHANE BACKING LAYER, SPRAY POLYURETHANE SYSTEM FOR PRODUCING SUCH A BACKING LAYER, AND USE OF SUCH A BACKING LAYER
COUCHE SUPPORT Á FAIBLE ÉMISSION, EN POLYURÉTHANNE, SYSTÈME DE POLYURÉTHANNE PULVÉRISÉ POUR LA PRÉPARATION D'UNE TELLE COUCHE SUPPORT ET UTILISATION D'UNE TELLE COUCHE SUPPORT

(30) Priorität: 24.07.2006 EP 06117749
(43) Veröffentlichungstag der Anmeldung: 15.04.2009
(73) Patentinhaber: BASF SE, 67056 Ludwigshafen (DE)
(72) Erfinder: SCHMALKUCHE, Cord, 49401 Damme (DE); HADICK, Udo, 49661 Cloppenburg (DE); LEIFHEIT, Holger, 49074 Osnabrück (DE); PARTUSCH, Georg, 49448 Lemförde (DE); REDL, Franz, Xaver, 49448 Lemförde (DE)
(86) Internationale Anmeldenummer: PCT/EP2007/057405
(87) Internationale Veröffentlichungsnummer: WO 2008/012247

(56) Entgegenhaltungen:
- US-A- 6 084 001
- US-A1- 2002 001 722
- US-A1- 2004 171 786
- US-A1- 2005 131 136

## Beschreibung

Die gegenwärtige Erfindung bezieht sich auf ein Sprühpolyurethansystem, das eine Polyolkomponente (A) und eine Isocyanatkomponente (B) enthält, wobei die Polyolkomponente (A) a1) mindestens eine mit Isocyanat reaktive Verbindung, a2) mindestens einen Reaktivkettenverlängerer mit zumindest zwei gegenüber Isocyanaten reaktiven Gruppen, wobei zumindest eine gegenüber Isocyanaten reaktive Gruppe eine freie, primäre NH₂-Gruppe ist, sowie a3) mindestens einen Metallkatalysator und a4) gegebenenfalls weitere Additive enthält, wobei das Sprühpolyurethansystem keinen Aminkatalysator enthält und wobei die mit Isocyanat reaktive Verbindung a1) mindestens ein Polyetherpolyol mit einem zahlengemittelten Molekulargewicht von 1500 bis 3500 g/mol und einer Funktionalität von 2,0 oder kleiner sowie mindestens ein Polyetherpolyol mit einem zahlengemittelten Molekulargewicht von 3000 bis 6000 g/mol und einer Funktionalität von 2,2 oder größer enthält. Des weiteren betrifft die vorliegende Erfindung ein Verfahren zur Herstellung einer Trägerschicht aus Polyurethan für Formteile und die Verwendung dieser Trägerschicht zur Herstellung von Automobilteilen.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemä-βen Gegenstandes nicht nur in der jeweils angegebenen Kombination, sondern auch in anderen Kombinationen verwendbar sind, ohne den Rahmen der Erfindung zu verlassen.

Polyisocyanat-Polyadditionsprodukte, üblicherweise Polyurethane und/oder Polyisocyanurate, erhältlich durch Umsetzung von Isocyanaten mit gegenüber Isocyanaten reaktiven Verbindungen, sind allgemein bekannt. Eine besondere Ausgestaltung dieser Produkte sind Formteile, die mit einer synthetischen Haut auf der Basis von Polyisocyanat-Polyadditionsprodukten kaschiert sind. Üblicherweise handelt es sich bei diesen Formteilen um Verbundteile, die im wesentlichen diese Haut als Trägerschicht und des weiteren üblicherweise einen Polyurethanweichschaumstoff und gegebenenfalls einen steifen Träger enthalten. Verwendung finden diese Formteile unter anderem im Automobilbau, wo sie beispielsweise zur Herstellung von Sitzen, Armaturentafeln, Konsolen, Ablagen oder Verkleidungsteilen für Innen- oder Außenanwendungen genutzt werden, aber auch im Schiffsbau und bei der Herstellung von bau- und landvartschaftlichen Fahrzeugen.

Die Haut wird dabei typischerweise unter Verwendung eines Sprühpolyurethansystems gebildet. Dabei werden Polyol- und Isocyanatkomponente vermischt und die so erhaltene Reaktionsmischung in eine Form gesprüht. Die Polyolkomponente reagiert dann mit der Isocyanatkomponente unter Bildung von Polyurethan. Solche Sprühsysteme sind bekannt und beispielsweise unter dem Namen Elastoskin® von der Firma BASF Corporation kommerziell erhältlich.

Die so gebildete Haut auf der Basis von Polyisocyanat-Polyadditionsprodukten stellt eine stabile Trägerschicht für oben beschriebene Formteile dar und bietet gegenüber anderen Trägerschichten, beispielsweise Trägerschichten auf Basis von Polyvinylchlorid, Vorteile in Bezug auf Reißfestigkeit und unerwünschte Verformungen sowie schnelle Entformbarkeit. Des weiteren sind durch die Verarbeitungseigenschaften des so gebildeten Polyurethans auch komplizierte Formgeometrien realisierbar. Bei geeigneter Maschinentechnik können auch tiefe Hinterschneidungen mit gleichmäßiger Schichtdicke abgebildet werden. Bedingt durch das elastische Produktverhalten über einen Temperaturbereich von -30 bis +80 °C besteht keine Gefahr eines Partikelflugs bei Airbagschüssen. Insbesondere im Tieftemperaturbereich ist dies von Bedeutung. Aufgrund dieser Vorteile ist eine solche Trägerschichten auf Basis von Polyurethanen ideal zur Verwendung bei der Herstellung dieser Formteile geeignet.

So offenbart beispielsweise EP 1600466 ein Sprühpolyurethansystem und eine daraus herstellbare Haut, wobei das Sprühpolyurethansystem eine Isocyanatkomponente und eine Harzkomponente aufweist und die Harzkomponente gegenüber Isocyanat reaktiv ist. Die Isocyanatkomponente umfasst auch aromatische Isocyanate. In der Harzkomponente sind gegenüber Isocyanat reaktive Polyole, beispielsweise Polyether oder Polyester, Kettenverlängerungsmittel mit einem Molekulargewicht von bis zu 400 g/mol, wie Hydrazine, primäre und sekundäre Diamine, Aminoalkohole, Aminosäure, Säuren, Glykole oder Mischungen daraus, genannt. Als Katalysatoren können metallbasierte Katalysatoren, aminbasierte Katalysatoren oder Mischungen daraus eingesetzt werden. In den Beispielen werden Polyetherole als Isocyanat-reaktive Komponente, 1,4-Butandiol als Kettenverlängerer und eine Mischung aus metallbasierten und aminbasierten Katalysatoren eingesetzt.

Gegenüber Trägerschichten aus z. B. Polyvinylchlorid haben die Trägerschichten aus Polyurethan zwar deutlich verringerte Emissionswerte leicht flüchtiger Bestandteile, allerdings treten auch bei diesen Trägerschichten wesentliche Emissionen auf. Unter Emission soll im Rahmen dieser Erfindung Emission nach VOC gemäß VDA 278 verstanden werden. Speziell umfasst der Ausdruck "Emission" die Emissionen kondensierbarer Bestandteile (FOG) nach VDA 278 sowie Emissionen nach DIN 75201/B (FOGGING).

Weiter ist es erwünscht. die mechanischen Eigenschaften einer Haut auf der Basis von Polyisocyanat-Polyadditionsprodukten, wie besonders die Zugfestigkeit, die Dehnung und die Weiterreißfestigkeit, weiter zu verbessern.

Aufgabe der Erfindung ist es daher ein Sprühpolyurethansystem zur Verfügung zu stellen, dass für die Herstellung einer Trägerschicht aus Polyurethan für Formteile geeignet ist, und eine geringe Emission sowie verbesserte mechanische Eigenschaften, speziell Zugfestigkeit, Dehnung und Weiterreißfähigkeit, aufweist.

Weiter ist es Aufgabe der Erfindung eine solche Haut auf der Basis von Polyisocyanat-Polyadditionsprodukten zu liefern, welche die Vorteile bekannter Häute auf der Basis von Polyisocyanat-Polyadditionsprodukten aufweist, deren Emission aber verringert und deren mechanische Eigenschaften, wie speziell Zugfestigkeit, Dehnung und Weiterreißfähigkeit, verbessert sind.

Diese Aufgabe wird durch ein Sprühpolyurethansystem gelöst, das eine Polyolkomponente (A) und eine Isocyanatkomponente (B) enthält, wobei die Polyolkomponente (A) a1) mindestens eine mit Isocyanat reaktive Verbindung, a2) mindestens einen Reaktivkettenverlängerer mit zumindest zwei gegenüber Isocyanaten reaktiven Gruppen, wobei zumindest eine gegenüber Isocyanaten reaktive Gruppe eine freie, primäre NH₂-Gruppe ist, sowie a3) mindestens einen Metallkatalysator und a4) gegebenenfalls weitere Additive enthält, und wobei das Sprühpolyurethansystem keinen Aminkatalysator enthält und wobei die mit Isocyanat reaktive Verbindung a1) mindestens ein Polyetherpolyol mit einem zahlengemittelten Molekulargewicht von 1500 bis 3500 g/mol und einer Funktionalität von 2,0 oder kleiner sowie mindestens ein Polyetherpolyol mit einem zahlengemittelten Molekulargewicht von 3000 bis 6000 g/mol und einer Funktionalität von 2,2 oder größer enthält.

Unter einem Sprühpolyurethansystem im Sinne der vorliegenden Erfindung wird ein System, bestehend aus mindestens zwei Komponenten, verstanden, wobei beim Vermischen der Komponenten und Sprühen der erhaltenen Reaktionsmischung in eine Form eine Trägerschicht aus Polyurethan oder Polyisocyanurat erhalten werden kann. Dabei sind Sprühpolyurethane reaktiver als Gießpolyurethane, wodurch es möglich ist, bei Auftreffen des Reaktivsystems auf die Form ein ortsfestes Produkt zu erhalten.

Als mit Isocyanat reaktive Verbindung a1) kann jedes bei der Polyurethanherstellung verwendbares Polyol eingesetzt werden. Vorzugsweise ist das Polyol ausgewählt aus Polyetherpolyolen, Polyesterpolyolen, aminfunktionalisierten Polyolen und Mischungen daraus. Besonders bevorzugt sind Polyetherpolyole.

Geeignete Polyetherpolyole können nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat, oder Kaliumisopropylat als Katalysatoren und unter Zusatz mindestens eines Startermoleküls, das 2 bis 4 reaktive Wasserstoffatome gebunden enthält, oder durch kationische Polymerisation mit Lewis-Säuren, wie Antimonpentachtorid, Borfluorid-Etherat u.a., oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propyienoxid.

Die Alkylenoxide können einzeln, alternierend nacheinander oder als Mischungen verwendet werden.

Als Startermoleküle kommen beispielsweise in Betracht: Wasser oder organische Dicarbonsäuren, wie Bernsteinsäure, Adipinsäure, Phthalsäure und Terephthalsäure..

Vorzugsweise verwendet werden als Startermoleküle mehrwertige, insbesondere zweibis achtwertige Alkohole, wie Ethandiol, Propandiol-1,2 und -1,3, Diethylenglykol, Dipropylenglykol, Butandiol-1,4, Hexandiol-1,6, Glycerin und Trimethylol-propan.

Die Polyetherpolyole, vorzugsweise Polyoxypropylen- und Polyoxypropylenpolyoxyethylenpolyole, besitzen eine gemittelte Funktionalität von 1,5 bis 3,5, bevorzugt von 1,8 bis 2,5 und insbesondere von 2,0 bis 2,2 und zahlengemittelte Molekulargewichte von vorzugsweise 1800 bis 10000, besonders bevorzugt 2400 bis 8000 und insbesondere 2500 bis 6000.

Die Polyetherpolyole werden in Form von Mischungen verwendet. So werden geeignete Mischungen, enthaltend Polyetherpolyole mit zahlengemittelten Molekulargewichten von 1500 bis 3500 und bevorzugt von 1500 bis 3000 und einer Funktionalität von 2,0 und kleiner, und solchen mit zahlengemittelten Molekulargewichten von 3000 bis 6000 und einer Funktionalität von 2,2 und größer, bevorzugt von 2,5 und größer, eingesetzt. Die unterschiedlichen Funktionalitäten werden dabei bevorzugt durch die Verwendung unterschiedlicher Starter erhalten.

Als Polyole eignen sich ferner polymermodifizierte Polyole, vorzugsweise polymermodifizierte Polyesterole oder Polyetherole, besonders bevorzugt Pfropf-Polyetherole. Hierbei handelt es sich um ein sogenanntes Polymerpolyol, welches üblicherweise einen Gehalt an, bevorzugt thermoplastischen, Polymeren von 5 bis 50 Gew.-%, bevorzugt 10 bis 45 Gew.-%, besonders bevorzugt 15 bis 25 Gew.-% und insbesondere 18 bis 22 Gew.-%, aufweist. Diese Polymerpolyesterole sind beispielsweise in EP-A-250 351 beschrieben und werden üblicherweise durch radikalische Polymerisation von geeigneten olefinischen Monomeren, beispielsweise Styrol, Acrylnitril, Acrylaten und/oder Acrylamid, in einem als Pfropfgrundlage dienenden Polyesterol hergestellt. Die Seitenketten entstehen im allgemeinen durch Übertragung der Radikale von wachsenden Polymerketten auf Polyesterole oder Polyetherole. Das Polymer-Polyol enthält neben dem Propfcopolymerisaten überwiegend die Homopolymere der Olefine, dispergiert in unverändertem Polyesterol.

In einer bevorzugten Ausführungsform werden als Monomere Acrylnitril, Styrol, insbesondere ausschließlich Styrol verwendet. Die Monomere werden gegebenenfalls in Gegenwart weiterer Monomerer, eines Makromers, eines Moderators und unter Einsatz eines Radikal-Initiators, meist Azo- oder Peroxidverbindungen, in einem Polyesterol als kontinuierlicher Phase polymerisiert.

Während der radikalischen Polymerisation werden die Makromere mit in die Copolymerkette eingebaut. Dadurch bilden sich Blockcopolymere mit einem Polyester- und einem Poly-acrylnitril-styrol-Block, welche in der Grenzfläche von kontinuierlicher Phase und dispergierter Phase als Phasenvermittler wirken und das Agglomerieren der Polymerpolyesterolpartikel unterdrücken. Der Anteil der Makromere beträgt üblicherweise 1 bis 15-Gew.-%, bezogen auf das Gesamtgewicht der zur Herstellung des Polymerpolyols eingesetzten Monomere.

Vorzugsweise ist der Anteil an Polymerpolyol größer als 5 Gew.-%, bezogen auf das Gesamtgewicht der Komponente (b). Die Polymerpolyole können beispielsweise, bezogen auf das Gesamtgewicht der Komponente (b), in einer Menge von 30 bis 90 Gew.-%, bevorzugt von 55 bis 80 Gew.-% enthalten sein. Besonders bevorzugt handelt es sich bei dem Polymerpolyol um Polymerpolyesterol oder Polyetherol.

Als Reaktivkettenverlängerer a2) werden Substanzen eingesetzt, die zwei, gegenüber Isocyanaten reaktive Gruppen aufweisen, wobei die Substanzen zumindest eine freie primäre NH₂-Gruppe aufweist und die Polyurethanreaktion beschleunigen. Die weitere gegenüber Isocyanat reaktive Gruppe kann beispielsweise ausgewählt sein aus einer primären Aminogruppe, einer Alkoholgruppe oder einer Thiolgruppe. Als Reaktivkettenverlängerer (a2) können beispielsweise aliphatische oder aromatische Amine verwendet werden. Vorzugsweise trägt der Reaktivkettenverlängerer zum thixotropen Verhalten der Reaktionsmischung bei. Besonders bevorzugte Reaktivkettenverlängerer sind daher niedermolekulare Diamine, insbesondere aliphatische Diamine. Dabei enthalten die Reaktivkettenverlängerer im Rahmen dieser Erfindung zwischen den zwei gegenüber Isocyanaten reaktiven Gruppen vorzugsweise zumindest zwei Alkylengruppen mit jeweils einem oder zwei Kohlenstoffatomen wobei die Alkylengruppen jeweils von einem Heteroatom getrennt werden. Vorzugsweise ist das Molekulargewicht des Reaktivkettenverlängerers (a2) zwischen 100 und 400 g/mol, besonders bevorzugt zwischen 100 und 200 g/mol und insbesondere zwischen 100 und 150 g/mol. Besonders bevorzugt ist Triethylenglykoldiamin als Reaktivkettenverlängerer eingesetzt. Der Anteil der Reaktivkettenverlängereran der Polyolkomponente (A) beträgt vorzugsweise 0,2 bis 4,0 Gew.-%, besonders bevorzugt 0,5 bis 2,0 Gew.-%, bezogen auf die Polyolkomponente (A).

Neben den Reaktivkettenverlängerern a2) können gegebenenfalls auch Reaktiv-Vernetzer eingesetzt werden, die zumindest eine freie primäre NH₂-Gruppe aufweisen, die Polyurethanreaktion beschleunigen und eine Funktionalität größer 2 aufweisen.

Neben den erfindungsgemäßen Reaktivkettenverlängerern können weitere übliche Kettenverlängerer eingesetzt werden. Diese sind beispielsweise Diole, besonders bevorzugt sind Monoethylenglykol und Butandiol. Besonders bevorzugt werden im Rahmen der Erfindung Mischungen aus einem erfindungsgemäßen Reaktivkettenverlängerer und einem Kettenverlängerer, bestehend aus einem Diol, eingesetzt. Dabei ist das Gewichtsverhältnis von erfindungsgemäßem Reaktivkettenverlängerer zu Diol vorzugsweise 1 : 5 bis 1 : 50, besonders bevorzugt 1 : 10 bis 1 : 15. Besonders bevorzugt werden Mischungen aus 1,4-Butandiol und Triethylenglykoldiamin eingesetzt.

Als Metallkatalysatoren a3) können alle Verbindungen, enthaltend ein Metallatom, eingesetzt werden, die die Polyurethanreaktion beschleunigen. Solche Katalysatoren werden beispielsweise im "Kunststoffhandbuch, Band 7, Polyurethane", Carl Hanser Verlag, 3. Auflage 1993, Kapitel 3.4.1 beschrieben. Beispiele solcher geeigneter Metallkatalysatoren sind zirkonium-, titan-, zinn-, kalium-, wismut-, zink-, quecksilber- und bleibasierte Katalysatoren, wie Zinnchlorid, Dibutylzinn, Zinnoxid, Bismuth-Zink-Neodecanoat, Dimethylzinncarboxylate, Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-etyhlhexanoat und Bismut-octanoat oder Mischungen davon. Besonders bevorzugt sind Bismuth-Zink-Neodecanoat und Dimethylzinncarboxylate.

Weiter enthält die Komponente A eines erfindungsgemäßen Sprühpolyurethansystems vorzugsweise des weiteren Additive a4). Diese umfassen Additive zur Wasseradsorption und zur Thixotropierung.

Als Additive zur Thixotropierung der Reaktionsmischung können alle bekannten Additive eingesetzt werden, die zur Thixotropierung beitragen. Vorzugsweise werden Additive verwendet, die die Viskosität der Polyolkomponente erhöhen. Besonders bevorzugt sind solche Additive, die sich auch bei längerer Lagerung der Polyolkomponente nicht absetzen. Insbesondere wird Siliziumdioxidpulver verwendet. Vorzugsweise hat dieses Pulver eine Oberfläche von mindestens 100 m²/g, besonders bevorzugt von mindestens 130 m²/g und insbesondere von mindestens 150 m²/g

Wenn ein Additiv zur Thixotropierung verwendet wird, ist die Menge an eingesetztem Additiv zur Thixotropierung vorzugsweise größer 0,5 Gewichtsprozent. Besonders bevorzugt ist die Menge an Additiv zur Thixotropierung in einem Bereich von 0,6 bis 2,5 Gewichtsprozent, jeweils bezogen auf das Gesamtgewicht des Sprühpolyurethansystems.

Als Additive zur Wasseradsorption werden vorzugsweise Aluminosilikate, ausgewählt aus der Gruppe der Natriumaluminasilikate, Kaliumaluminasilikate Calciumaluminasilikate Cäsiumaluminasilikate, Bariumaluminasilikate, Magnesiumaluminasilikate Strontiumaluminasilikate Natriumaluminophosphate, Kaliumaluminophosphate, Calciumaluminophosphate und Mischungen davon, verwendet. Besonders bevorzugt werden Mischungen von Natrium-, Kalium- und Calciumaluminasilikaten in Ricinusöl als Trägersubstanz verwendet.

Vorzugsweise hat das Additivs zur Wasserabsorption eine zahlengemittelte Partikelgröße von nicht größer als 200 µm, besonders bevorzugt nicht größer als 150 µm und insbesondere nicht größer als 100 µm. Vorzugsweise beträgt die Porenweite des erfindungsgemäßen Additivs zur Wasserabsorption 2 bis 5 Ängstroem.

Wenn ein Additiv zur Wasserabsorption zugegeben wird, geschieht dies vorzugsweise in Mengen größer einem Gewichtsteil, besonders bevorzugt im Bereich von 1.2 bis 2 Gewichtsteilen, bezogen auf das Gesamtgewicht des Sprühpolyurethansystems.

Vorzugsweise werden das Additiv zur Wasseradsorption und das Additiv zur Thixotropierung in einem Gewichtsverhältnis von 1:1 bis 9:1, besonders bevorzugt von 1,6 : 1 bis 5 : 1 eingesetzt, wodurch verhindert wird, dass das Additiv zur Wasseradsorption sich bei längerem Lagern in der Polyolkomponente (A) absetzt. Dies führt zu einer Maximierung des Effekts des Additivs zur Wasseradsorption.

Ein erfindungsgemäßes Sprühpolyurethansystem kann des weiteren Additive, wie Füllstoffe, Antioxidantien, Farbstoffe, Pigmente, optische Aufheller und Stabilisatoren gegen Wärme, Licht, UV-Strahlung, Weichmacher oder oberflächenaktive Substanzen enthalten. Beispiele für Antioxidantien, Stabilisatoren gegen Wärme, Licht oder UV-Strahlung sind Stabilisatoren aus der Gruppe der sterisch gehinderten Phenole, wie zum Beispiel Cyanox 1790 ® der Firma Cytec Industries INC, HALS-Stabilisatoren (hindered amine iight stabilizer). Triazine, Benzophenone und der Benzotriazole. Beispiele für Pigmente und Mattierungsmittel sind Titandioxid. Magnesiumstearat. Silikonöl, Zinkoxid und Bariumsulfat. Beispiele für Farbstoffe sind saure Farbstoffe und Dispersionsfarbstoffe. Diese Additive können der Komponente (A) oder vorzugsweise einer Komponente (C) zugegeben werden. Werden solche Additive in einer Komponente (C) zugegeben, enthält die Komponente (C) vorzugsweise des Weiteren ein Löse- oder Dispergiermittel. Als Löse- oder Dispergiermittel dient vorzugsweise eine gegenüber Isocyanaten reaktive Verbindung, besonders bevorzugt ein Poyetherpolyol.

Als Isocyanatkomponente werden vorzugsweise aromatische Isocyanate verwendet. Vorzugsweise werden aromatische Isocyanate der allgemeinen Formel R(NCO)_{z} eingesetzt, wobei R ein polyvalenter organischer Rest ist, der einen Aromaten aufweist, und z eine ganze Zahl von mindestens 2 ist. Beispiele hierfür sind 4,4'-Diisocyanatobenzol, 1,3-Diisocyanato-o-xylol, 1,3-Diisocyanato-p-xylol, 1,3-Diisocyanato-m- xylol, 2 ,4-Diisocyanato-1-chlorobenzol, 2,4-Diisocyanato-1-nitrobenzol, 2,5-Diisocyanato-1-nitrobenzol, m-Phenylendiisocyanat, p-Phenylendiisocyanat, 2,4-Toluoldiisocyanat, 2,6-Toluoldiisocyanat, Mischungen aus 2,4- and 2,6-Toluoldiisocyanat, 1,5-Naphthalindiisocyanat, 1-Methoxy-2,4-phenylendiisocyanat, 4,4'-Diphenylmethandiisocyanat, 2,4'-Diphenylmethandiisocyanat, 4,4'-Biphenylendiisocyanat, 3,3'-Dimethyl-4,4'-diphenylmethandiisocyanat, und 3,3'-Dimethyldiphenylmethan-4,4'-diisocyanat; Triisocyanate, wie 4,4',4"-Triphenylmethantriisocyanat und 2,4,6-Toluoltriisocyanat, und Tetraisocyanate, wie 4,4'-Dimethyl-2.2'-5,5'-diphenylmethantetraisocyanat. Besonders geeignet Besonders bevorzugt sind Toluoldiisocyanat, 2,4'-Diphenylmethandiisocyanate, 4,4'-Diphenylmethandiisocyanat, Polymethylenpolyphenylenpolyisocyanat, and Mischungen daraus.

Besonders bevorzugt enthält die Isocyanatkomponente ein modifiziertes, multivalentes Isocyanat, beispielsweise ein Produkt, das durch chemische Reaktion der oben genannten Polyisocyanate erhalten wird. Beispiele schließen Polyisocyanate ein, welche Estergruppen, Biuretgruppen, Allophanatgruppen und vorzugsweise Carbodiimidgruppen, Uretonimingruppen, Isocyanuratgruppen und/oder Urethangruppen enthalten. Spezielle Beispiele sind aromatische Polyisocyanate, die Urethangruppen enthalten und einen NCO-Gehalt von 8 bis 33,6 Gewichtsprozent, besonders bevorzugt von 18 bis 25 Gewichtsprozent, aufweisen, beispielsweise 4,4'-Diphenylmethandiisocyanat oder Toluoldiisocyanat, das durch Reaktion mit Diolen, Triolen, Oxyalkylenglykolen, Dioxyalkylenglykolen, Polyoxyalkylenglykolen. Polyesterpolyolen oder Polytetrahydrofuran, die alleine oder als Mischungen von Polyoxyalkylenglykole eingesetzt werden können, modifiziert wurde. Spezielle Beispiele der Polyoxyalkylenglykole schließen Diethylenglykole, Dipropylenglykole, Polyoxyethylenglykole, Polyoxypropylenglykole und Polyoxypropylenpolyoxethylenglykole ein. Insbesondere werden Umsetzungsproedukte von 4.4'- Diphenyimethandiisocyanat und Polyetherpolyolen mit einer Funktionalität von 1,8 bis 3,0. bevorzugt 1,8 bis 2,5, als modifiziertes, multivalentes isocyanat eingesetzt.

In einer weiteren Ausführungsform wird als Polyisocyanatkomponente (B) eine Mischung aus 4,4'- Diphenylmethandiisocyanat und einem 4,4'- Diphenylmethandiisocyanat, das durch den Einbau von Uretdion-, Carbamat-, Isocyanurat-, Carbodiimid- oder Allophanatgruppen modifiziert ist, verwendet. Besonders bevorzugt enthält die Isocyanatkomponente dabei Mischungen aus 4,4'-Diphenylmethandiisocyanat und carbodiimid-modifiziertem 4,4' Diphenylmethandiisocyanat.

Das Sprühpolyurethansystem im Sinne der Erfindung ist vorzugsweise thixotrop. Dabei wird unter thixotropem Verhalten verstanden, dass die Viskosität einer bei einer konstanten Scherrate gescherten Probe bei ansonsten jeweils identischen Bedingungen, wie Temperatur und Zeit seit Vermischen der Komponenten, bei höheren Scherraten (beispielweise Scherraten größer 200 S⁻¹) geringer ist als bei geringen Scherraten (beispielsweise kleiner 1 S⁻¹). Vorzugsweise wird die Viskosität des Sprühpolyurethansystems so eingestellt, dass sich Polyolkomponente (A) und Isocyanatkomponente (B) leicht vermischen lassen, diese aber beim Aufsprühen in eine Form nicht verlaufen, so dass eine gleichmäßige Verteilung des auf eine senkrechte Fläche aufgesprühten Materials möglich ist.

Die mittlere Funktionalität der eingesetzten Reaktivkomponenten des Sprühpolyurethansystems pro Mol, beträgt vorzugsweise von 1,5 bis 3,5, besonders bevorzugt 1,8 bis 2,5 und insbesondere 2,0 bis 2,2. Dabei werden im Rahmen dieser Erfindung unter Reaktivkomponenten die eingesetzten Isocyanate, Polyole, Reaktivkettenverlängerer und Kettenverlängerer verstanden.

Das Sprühpolyurethansystem im Sinne der Erfindung enthält keine Aminkatalysatoren. Unter Aminkatalysatoren im Sinn der Erfindung sind Verbindungen zu verstehen, weiche die Reaktion von Isocyanat mit einer mit Isocyanat reaktiven Komponente katalysieren und ein sekundäres oder tertiäres Stickstoffatom enthalten.

Das erfindungsgemäße System eignet sich zur Herstellung von Trägerschichten. Dazu werden die einzelnen Komponenten (A), (B) und gegebenenfalls (C) vermischt und in eine Form, die gegebenenfalls mit einem Formtrennmittel behandelt wurde, gesprüht, beispielsweise wie es bereits in EP 0303305 beschrieben ist. Auch andere für Polyurethan-Systeme geeignete Sprühmaschinen sind zur Verarbeitung geeignet. Dabei erfolgt das Vermischen der Komponenten vorzugsweise in einem Mischkopf. Vorzugsweise beträgt der Isocyanatindex einer erfindungsgemäßen Mischung aus Polyolkomponente (A) und Isocyanatkomponente (B) und gegebenenfalls der Komponente (C) 90 bis 110, insbesondere 95 bis 105. Unter dem Isocyanatindex wird im Rahmen der vorliegenden Erfindung das stöchiometrische Verhältnis an Isocyanataruppen zu mit Isocyanat reaktiver, Gruppen, multipliziert mit 100, verstanden. Unter mit isocyanat reaktiven Gruppen werden dabei alle in der Reaktionsmischung enthaltenen, mit Isocyanat reaktiven Gruppen verstanden, nicht aber die Isocyanatgruppe selbst.

Von den Angaben in EP 0303305 abweichend erfolgt im erfindungsgemäßen Verfahren vorzugsweise ein zusätzlicher Fertigungsschritt. So kann nach der Einbringung eines geeigneten Formtrennmittels nach ausreichender Ablüftungszeit der Eintrag der Lackierschicht, die auch als "in-mould-coating" bezeichnet wird, durch geeignete Lackierwerkzeuge erfolgen. Dabei können alle, für die Herstellung von Trägerschichten aus Polyurethan bekannten Lacke als "in-mould-coating" verwendet werden. Vorzugsweise werden als Lacke Polyurethanlacke mit aliphatischen Isocyanaten eingesetzt. Als Verfahren kommen hierbei zum Beispiel Airless-Sprühverfahren oder elektrostatische Auftragungsmethoden zum Einsatz. Die Schichtstärke dieser Lackschicht liegt im Bereich von 20-100 µm. Die Lacke werden vorzugsweise mit emissionsarmen Lösungsmitteln appliziert. Häufig wird Wasser verwendet. Um ein Aufschäumen des Polyurethans zu verhindern, muss eine ausreichende Ablüftzeit des Lacks gewährleistet sein. Anschließend wird das Polyurethan gleichmäßig auf die mit Lack beschichtete Form gesprüht. Die häufig angestrebte Schichtdicke des Polyurethans liegt im Bereich von 0,01 bis 10 mm, vorzugsweise von 0,1 bis 5 mm und insbesondere von 0,8-1,2 mm. Nach einer Reaktionszeit von vorzugsweise 60-180s wird das Formteil zur Weiterverarbeitung entformt.

Bevorzugte Materialtemperaturen des Polyurethans beim Versprühen liegen zwischen 30 und 120, besonders bevorzugt zwischen 50 und 90 und insbesondere zwischen 60 und 80°C. Die Formtemperatur liegt vorzugsweise bei 30 bis 120, besonders bevorzugt bei 55 bis 95 und insbesondere bei 65-85°C. Dabei ist die Formtemperatur vorzugsweise 0 bis 15°C, besonders bevorzugt 5 bis 10°C höher als die des Polyurethans beim Versprühen. Je nach Geometrie des Bauteils und nach Ausbildung des Sprühkegels liegt der mittlere Abstand der Sprühdüse von der Formoberfläche vorzugsweise zwischen 0,5 und 30, bevorzugt 10 und 30 cm. Die Formen bestehen vorzugsweise aus Metall, häufig Stahl oder Aluminium.

Überraschenderweise zeigt ein erfindungsgemäßes Sprühpolyurethansystem hervorragende Verarbeitungseigenschaften. So zeigt ein erfindungsgemäßes Sprühpolyurethansystem nach Vermischen der Komponenten (A), (B) und gegebenenfalls (C) bei gleicher Entformzeit eine gegenüber dem Stand der Technik eine verlängerte Topfzeit. Damit ist es möglich, ein solches System nach dem Vermischen länger zu verarbeiten. Dies ist insbesondere wichtig, wenn die Reaktionsmischung nach dem Vermischen im Mischkopf durch ein Rohrleitungssystem zum Sprühkopf geführt wird. Dadurch wird ein Zusetzen dieses Rohrleitungssystems durch bereits gebildetes Polyurethan verhindert bzw. verzögert. So beträgt die "Offene Zeit", während der die Reaktionsmischung verarbeitet werden kann, für ein System, das eine Entformzeit von 60 s ermöglicht, bei 25 °C vorzugsweise mehr als 30 Sekunden, besonders bevorzugt mehr als 45 Sekunden und insbesondere mehr als 50 Sekunden. Unter "Entformzeit" wird dabei die Zeitspanne zwischen Aufsprühen des Sprühpolyurethansystems auf die Form und dem Zeitpunkt, zu dem das fertige Formteil unbeschädigt aus der Form entnommen werden kann, verstanden. Weiter härtet ein erfindungsgemäßes Sprühpolyurethansystem nach Beginn der Reaktion, die beispielsweise durch eine erhöhte Temperatur der Form gegenüber dem Polyurethan beim Versprühen gestartet werden kann, schnell aus.

Das Aushärteverhalten kann dabei durch Messen des Speichermoduls G' bestimmt werden. So zeigt die Auftragung des Speichermoduls G' gegenüber der Zeit ein unteres Plateau, das für die im wesentlichen noch nicht ausreagierte Mischung steht und die offene Zeit der Mischung angibt, und ein oberes Plateau, das für das ausreagierte Produkt steht. Ein erfindungsgemäßes Sprühpolyurethansystem weist bei konstanter Temperatur und einer offenen Zeit von größer 50 Sekunden einen Anstieg des Speichermoduls G' vom unteren Plateau auf das obere Plateau und damit eine Aushärtegeschwindigkeit von vorzugsweise 10 Sekunden und weniger, besonders bevorzugt von 5 Sekunden und weniger und insbesondere von 3 Sekunden und weniger, auf. Dies sorgt für eine geringere Fließneigung und ermöglicht damit für eine gleichmäßigere Schichtdicke der fertigen Trägerschicht, auch bei komplizierter Formgebung.

Die erfindungsgemäße Trägerschicht aus Polyurethan zeichnet sich durch vorteilhafte mechanische Eigenschaften aus. So weist eine solche Trägerschicht herausragende Eigenschaften bezüglich Dehnung, Zugfestigkeit und Weiterreißfestigkeit auf. Dabei beträgt die Dehnung nach DIN EN ISO 527 vorzugsweise mehr als 200 %, die Zugfestigkeit nach DIN EN ISO 527 vorzugsweise mehr als 7,5 N/mm² und die Zugfestigkeit nach DIN 53515 vorzugsweise bei mehr als 17 N/mm.

Die so erhältliche Trägerschicht aus Polyurethan kann beispielsweise in Anwendungen eingesetzt werden, wo ein lederartiger Charakter der Oberfläche gefordert ist. Speziell kann die erfindungsgemäße Trägerschicht aus Polyurethan beispielsweise für die Herstellung von Sitzen, Armaturentafeln, Konsolen, Ablagen oder Automobilinnen- oder Außenverkleidungen verwendet werden.

Überraschenderweise zeigt eine erfindungsgemäße Trägerschicht aus Polyurethan eine besonders vorteilhafte Haptik. Unter einer vorteilhaften Haptik versteht man ein angenehmes Gefühl beim Berühren.

Die Härte der erfindungsgemäßen Trägerschicht kann in einem weiten Bereich, beispielsweise durch die Wahl des eingesetzten Isocyanats, der Auswahl der Kettenverlängerungsmischung oder der Wahl des Isocyanatindex, variiert werden. Dies ist dem Fachmann bekannt. So hat eine erfindungsgemäße Trägerschicht aus Polyurethan beispielsweise eine shoreA-Härte vcn zwischen 30 und 80, vorzugsweise 40-75 und besonders bevorzugt 50-70.

Ein weiterer Vorteil einer erfindungsgemäßen Trägerschicht aus Polyurethan ist eine geringe Emission. So liegt die Emission leichtflüchtiger Bestandteile (VCO) gemäß VDA 278 unter einem Wert von 100 ppm, vorzugsweise unter 50 ppm und besonders bevorzugt unter40 ppm. Weiter liegt die Emission der kondensierbaren Bestandteile (FOG) einer erfindungsgemäßen Trägerschicht gemäß VDA 278 unter 20 ppm, vorzugsweise unter 10 ppm und besonders bevorzugt unter 8 ppm. Die Emissionen gemäß DIN 75201/B (FOGGING) einer erfindungsgemäßen Trägerschicht liegen unter 1,5 ppm, bevorzugt unter 1 ppm und insbesondere unter 0,5 ppm. Unter Emission soll im Rahmen dieser Erfindung Emission nach VOC gemäß VDA 278 verstanden werden. Speziell umfasst der Ausdruck "Emission" die Emissionen kondensierbarer Bestandteile (FOG) nach VDA 278 sowie nach DIN 75201/B (FOGGING).

Die vorliegende Erfindung wird im Folgenden anhand von Beispielen verdeutlicht.

### 1.: Formulierung:

| Komponente | Beispiel 1 [Gew.-%] | Vergleichsbeispiel 1: [Gew.-%] | Vergleichsbeispiel 2: [Gew.-%] |
|---|---|---|---|
| Polyol 1 | 70 | 71,75 | 0 |
| Polyol 2 | 15 | 14 | 87,4 |
| Polyol- 3 | 0 | 0 | 1,5 |
| Kettenverlängerer 1 | 10 | 10 | 7,5 |
| Kettenverlängerer 2 | 1,5 | 0 | 2,5 |
| Katalysator 1 | 0 | 1,1 | 0 |
| Katalysator 2 | 0,05 | 0.025 | 0,1 |
| Entschäumer | 0,5 | 0,1 | 0 |
| Additiv zur Wasseradsorption | 1,8 | 2 | 1,0 |
| Additiv zur Thixotropierung | 0,65 | 0,65 | 0 |
| Additive zur UV-Stabilisierung | 0,5 | 0,5 | 0 |
| Isocyanat 1 | 100 | 100 | 60 |
| Isocyanat 2 | 0 | 0 | 40 |
| Index | 100 | 100 | 100 |

Dabei handelt es sich bei den Einsatzstoffen:
Polyol 1 um ein Polyetherpolyol mit einem zahlenmittleren Molekulargewicht von ca. 4400 g/mol, hergestellt ausgehend von Glycerin als Starter und Propylenoxid sowie einem endständigen Ethylenoxidgehalt von ca.13 Gew.%, bezogen auf das Gesamtgewicht des Polyols,
Polyol 2 um ein Polyetherpolyol mit einem zahlenmittleren Molekulargewicht von ca. 3400 g/mol, hergestellt ausgehend von Propylenglykol als Starter und Propylenoxid sowie einem endständigen Ethylenoxidgehalt von ca.19 Gew.-%, bezogen auf das Gesamtgewicht des Polyols,
Polyol 3 um ein Polyetherpolyol mit einem zahlenmittleren Molekulargewlcht von ca. 270 g/mol, hergestelit ausgehend von Trimethylpropan als Starter sowie einem Ethylenoxidgehalt von ca.51,3 Gew.%, bezogen auf das Gesamtgewicht des Polyols, Kettenverlängerer 1 um 1,4-Butandiol,
Kettenverlängerer 2 um Ethylenglykoldiamin mit einer Aminzahl von 757 mg/g, Katalysator 1 um Diazabicyclooctan,
Katalysator 2 um Alkylzinnmercaptid,
Additiv zur Wasseradsorption um eine Mischungen von Natrium-, Kalium- und Calciumaluminasilikaten,
Additiv zur Thixotropierung um Siliziumdioxidpulver,
Additive zur UV-Stabilisierung um handelsübliche UV-Absorber,
Isocyanat 1 um ein Prepolymer, hergestellt durch die Umsetzung von 4,4'- Diphenylmethandiisocyanat und Polyetherpolyolen mit einem NCO-Gehalt von 22,9 % und Isocyanat 2 um Carbodiimid-modifiziertes 4,4'- Diphenylmethandiisocyanat mit einem NCO-Gehalt von 29,5%.

Die in Tabelle 1 angegebenen Komponenten wurden vermischt und in eine auf 80°C temperierte Form gesprüht. Nach Verfestigung wurde eine Trägerschicht mit einer Dicke von 2 mm entformt. Die physikalischen Eigenschaften der so erhaltenen Trägerschichten sind in Tabelle 2 und die Emissionswerte dieser Trägerschichten in Tabelle 3 widergegeben. Tabelle 4 gibt die offene Zeit der Mischungen bei 25°C sowie die minimale Entformzeit der erhaltenen Tragerschichten an.

**Tabelle 2**

| Phys. Eigenschaft | Beispiel 1 | Vergleichsbeispiel 1 | Vergleichsbeispiel 2 |
|---|---|---|---|
| Dehnung nach DIN EN ISO 527 [%] | 330 | 181 | 269 |
| Zugfestigkeit nach DIN EN ISO 527 [N/mm²] | 11 | 8 | 6 |
| Weiterreißfestigkeit nach DIN 53515 [N/mm] | 18 | 17 | 12 |
| Härte [Shore A] | 74 | 75 | 75 |

**Tabelle 3**

| Emissionen | Beispiel 1 | Vergleichsbeispiel 1 | Vergleichsbeispiel 2 |
|---|---|---|---|
| VOC [ppm] | 23 | 440 | 30 |
| FOG [ppm] | 5 | 8 | 6 |

**Tabelle 4**

| Parameter | Beispiel 1 | Vergleichsbeispiel 1 | Vergleichsbeispiel 2 |
|---|---|---|---|
| Entformzeit [s] | 90 | 240 | 90 |
| Offene Zeit bei 25°C [s] | 60 | 20 | 30 |

Eine Sprühhaut gemäß Beispiel 1 zeigt gegenüber den Vergleichsbeispielen verbesserte mechanische Eigenschaften, wie Dehnung, Zugfestigkeit und Weiterreißfestigkeit sowie verringerte Emissionen. Weiter ist die offene Zeit bei gleicher bzw. kürzerer Entformzeit deutlich länger als in den Vergleichsbeispielen.

## Patentansprüche

1. Sprühpolyurethansystem, enthaltend eine Polyolkomponente (A) und eine Isocyanatkomponente (B), wobei die Polyolkomponente (A)
a1) mindestens eine mit Isocyanat reaktive Verbindung,
a2) mindestens einen Reaktivkettenverlängerer mit zumindest zwei gegen über Isocyanaten reaktiven Gruppen, wobei zumindest eine gegenüber Isocyanaten reaktive Gruppe eine freie, primäre NH₂-Gruppe ist, sowie
a3) mindestens einen Metallkatalysator und
a4) gegebenenfalls weitere Additive enthält,
**dadurch gekennzeichnet, dass** es keinen Aminkatalysator enthält, wobei die mit Isocyanat reaktive Verbindung a1) mindestens ein Polyetherpolyol mit einem zahlengemittelten Molekulargewicht von 1500 bis 3500 g/mol und einer Funktionalität von 2,0 oder kleiner sowie mindestens ein Polyetherpolyol mit einem zahlengemittelten Molekulargewicht von 3000 bis 6000 g/mol und einer Funktionalität von 2,2 oder größer enthält.

2. Sprühpolyurethansystem nach Anspruch 1, **dadurch gekennzeichnet, dass** der Reaktivkettenverlängerer a2) zwischen den zwei gegenüber Isocyanaten reaktiven Gruppen zumindest zwei Alkylengruppen mit jeweils einem oder zwei Kohlenstoffatomerl aufweist, wobei die Alkylgruppen jeweils durch ein Heteroatom getrennt sind.

3. Sprühpolyurethansystem nach Anspruch 1 oder 2, **dadurch gekennzeichnet, dass** der Reaktivkettenverlängerer a2) ein Molekulargewicht von 100 bis 400 g/mol aufweist.

4. Sprühpolyurethansystem nach Anspruch 1 bis 3, **dadurch gekennzeichnet, dass** der Reaktivkettenverlängerer (a2) ein Diamin enthält.

5. Sprühpoiyurethartsystem nach Anspruch 1 bis 4, **dadurch gekennzeichnet, dass** die Komponente A a4) Additive enthält, umfassend Additive zur Wasseradsorption und zur Thixotropierung.

6. Sprühpolyurethansystem nach Anspruch 5, **dadurch gekennzeichnet, dass** die Additive zur Thixotropierung Siliziumdioxid mit einer spezifischen Oberfläche von 150 m²/g und mehr aufweisen.

7. Sprühpolyurethansystem nach Anspruch 5 oder 6, **dadurch gekennzeichnet, dass** das Additiv zur Wasserabsorption ein Aluminasilikat oder Mischungen von Alumonasilikaten enthält.

8. Sprühpolyurethansystem nach Anspruch 7, **dadurch gekennzeichnet, dass** die mittlere Partikelgröße des Additivs zur Wasserabsorption nicht größer als 100 µm ist und Poren mit einer Porenweite von 2 bis 5 Ångstroem aufweist.

9. Sprühpolyurethansystem nach einem der Ansprüche 1 bis 8, **dadurch gekennzeichnet, dass** die Isocyanatkomponente (B) ein Prepolymer, bestehend aus mindestens einer 4,4'-Diphenylmethandiisocyanat enthaltenden Komponente und mindestens einem Polyetherpolyol mit einer mittleren Funktionalität von 1,8 bis 3, aufweist.

10. Sprühpolyurethansystem nach einem der Ansprüche 1 bis 8, **dadurch gekennzeichnet, dass** die Isocyanatkomponente (B) mindestens zwei 4,4'-MDIenthaltende Komponenten enthält, von denen mindestens eine durch den Einbau von Uretdion-, Carbamat-, Isocyanurat-, Carbodiimid- oder Allophanatgruppen modifiziert ist.

11. Sprühpolyurethansystem nach Anspruch 1-10, **dadurch gekennzeichnet, dass** die mittlere Funktionalität der eingesetzten Reaktivkomponenten zwischen 1,5 und 3,5, bevorzugt zwischen 1,8 und 2,5, besonders bevorzugt zwischen 2,0 und 2,2 liegt.

12. Sprühpolyurethansystem nach Anspruch 1 bis 11, **dadurch gekennzeichnet, dass** des weiteren ein Farbstoff enthalten ist.

13. Sprühpolyurethansystem nach Anspruch 12, **dadurch gekennzeichnet, dass** das Sprühpolyurethansystem des weiteren eine Komponente (C) umfasst, enthaltend den Farbstoff.

14. Verfahren zur Herstellung einer Trägerschicht aus Polyurethan für Formteile, bei dem man die Komponenten eines Sprühpolyurethansystems nach Anspruch 1 bis 15 vermischt und in eine Form sprüht.

15. Trägerschicht aus Polyurethan für Formteile, erhältlich nach dem Verfahren nach Anspruch 14.

16. Trägerschicht nach Anspruch 15 **dadurch gekennzeichnet, dass** die Dehnung nach DIN EN ISO 527 größer 200 % ist, die Zugfestigkeit nach DIN EN ISO 527 größer 7,5 N/mm² ist und die Weiterreißfestigkeit nach DIN 53515 größer 17 N/mm ist.

17. Trägerschicht nach Anspruch 15 oder 16, **dadurch gekennzeichnet, dass** die Emission leichiflüchtiger Bestandteile gemäß VDA 278 kleiner 100 ppm ist, die Emission kondensierbarer Bestandteile gemäß VDA 278 kleiner 20 ppm ist und die Emission gemäß DIN 75201/B kleiner 1,5 ppm ist.

18. Verwendung der Trägerschicht aus Polyurethan nach Anspruch 15 bis 17 zur Herstellung von Sitzen, Armaturentafeln, Konsolen, Ablagen oder Automobilinnen- oder Außenverkleidungen.

## Claims

1. A spray-polyurethane system, comprising a polyol component (A) and an isocyanate component (B), where the polyol component (A) comprises
a1) at least one compound reactive with isocyanate,
a2) at least one reactive chain extender having at least two groups reactive toward isocyanates, where at least one group reactive toward isocyanates is a free, primary NH₂ group, and also
a3) at least one metal catalyst, and
a4) if appropriate, further additives,
which comprises no amine catalyst,
where the compound a1) reactive with isocyanate comprises at least one polyether polyol whose number-average molar mass is from 1500 to 3500 g/mol and whose functionality is 2.0 or smaller, and also at least one polyether polyol whose number-average molar mass is from 3000 to 6000 g/mol and whose functionality is 2.2 or greater.

2. The spray-polyurethane system according to claim 1, wherein the reactive chain extender a2) has, between the two groups reactive toward isocyanates, at least two alkylene groups each having one or two carbon atoms, where each of the alkyl groups has separation via a heteroatom.

3. The spray-polyurethane system according to claim 1 or 2, wherein the molar mass of the reactive chain extender a2) is from 100 to 400 g/mol.

4. The spray-polyurethane system according to any of claims 1 to 3, wherein the reactive chain extender a2) comprises a diamine.

5. The spray-polyurethane system according to any of claims 1 to 4, wherein component A comprises additives a4), encompassing additives for water adsorption and for thixotropy.

6. The spray-polyurethane system according to claim 5, wherein the additives for thixotropy comprise silicon dioxide whose specific surface area is 150 m²/g or greater.

7. The spray-polyurethane system according to claim 5 or 6, wherein the additive for water absorption comprises an aluminosilicate or a mixture of aluminosilicates.

8. The spray-polyurethane system according to claim 7, wherein the average particle size of the additive for water absorption is not greater than 100 µm and comprises pores whose pore width is from 2 to 5 Å.

9. The spray-polyurethane system according to any of claims 1 to 8, wherein the isocyanate component (B) comprises a prepolymer, composed of at least one component comprising diphenylmethane 4,4'-diisocyanate and of at least one polyether polyol whose average functionality is from 1.8 to 3.

10. The spray-polyurethane system according to any of claims 1 to 8, wherein the isocyanate component (B) comprises at least two components comprising 4,4'-MDI, of which at least one has been modified via incorporation of uretdione groups, carbamate groups, isocyanurate groups, carbodiimide groups, or allophanate groups.

11. The spray-polyurethane system according to any of claims 1 to 10, wherein the average functionality of the reactive components used is from 1.5 to 3.5, preferably from 1.8 to 2.5, particularly preferably from 2.0 to 2.2.

12. The spray-polyurethane system according to any of claims 1 to 11, which also comprises a dye.

13. The spray-polyurethane system according to claim 12, which moreover encompasses a component (C), comprising the dye.

14. A process for production of a backing layer composed of polyurethane for moldings, by mixing the components of the spray-polyurethane system according to any of claims 1 to 13 and spraying them into a mold.

15. A backing layer composed of polyurethane for moldings, obtainable by the process according to claim 14.

16. The backing layer according to claim 15, wherein the tensile strain to DIN EN ISO 527 is greater than 200%, the tensile strength to DIN EN ISO 527 is greater than 7.5 N/mm², and the tear propagation resistance to DIN 53515 is greater than 17 N/mm.

17. The backing layer according to claim 15 or 16, wherein emission of volatile constituents to VDA 278 is smaller than 100 ppm, emission of condensable constituents to VDA 278 is smaller than 20 ppm, and emission to DIN 75201/B is smaller than 1.5 ppm.

18. The use of the backing layer composed of polyurethane according to any of claims 15 to 17 for production of seats, dashboards, consoles, trays, or internal or external automobile trim.

## Revendications

1. Système de polyuréthane à injecter, contenant un composant polyol (A) et un composant isocyanate (B), le composant polyol (A) contenant
a1) au moins un composé réactif avec isocyanate,
a2) au moins un agent réactif d'allongement de chaîne présentant au moins deux groupes réactifs par rapport aux isocyanates, au moins un groupe réactif par rapport aux isocyanates étant un groupe NH₂ libre, primaire, ainsi que
a3) au moins un catalyseur métallique et
a4) le cas échéant d'autres additifs, **caractérisé en ce qu'**il ne contient pas de catalyseur de type amine,
le composé réactif avec isocyanate a1) étant au moins un polyétherpolyol présentant un poids moléculaire numérique moyen de 1500 à 3500 g/mole et une fonctionnalité de 2,0 ou moins, ainsi qu'au moins un polyétherpolyol présentant un poids moléculaire numérique moyen de 3000 à 6000 g/mole et une fonctionnalité de 2,2 ou plus.

2. Système de polyuréthane à injecter selon la revendication 1, **caractérisé en ce que** l'agent réactif d'allongement de chaîne a2) présente, entre les deux groupes réactifs par rapport aux isocyanates, au moins deux groupes alkylène présentant à chaque fois un ou deux atomes de carbone, les groupes alkyle étant à chaque fois séparés par un hétéroatome.

3. Système de polyuréthane à injecter selon la revendication 1 ou 2, **caractérisé en ce que** l'agent réactif d'allongement de chaîne a2) présente un poids moléculaire de 100 à 400.

4. Système de polyuréthane à injecter selon la revendication 1 à 3, **caractérisé en ce que** l'agent réactif d'allongement de chaîne (a2) contient une diamine.

5. Système de polyuréthane à injecter selon la revendication 1 à 4, **caractérisé en ce que** le composant A contient a4) des additifs, comprenant des additifs pour l'adsorption d'eau et pour rendre le système thixotropique.

6. Système de polyuréthane a injecter selon la revendication 5, **caractérisé en ce que** les additifs pour rendre le système thixotropique présentent du dioxyde de silicium présentant une surface spécifique de 150 m²/g et plus.

7. Système de polyuréthane à injecter selon la revendication 5 ou 6, **caractérisé en ce que** l'additif pour l'absorption d'eau contient un aluminosilicate ou des mélanges d'aluminosilicates.

8. Système de polyuréthane à injecter selon la revendication 7, **caractérisé en ce que** la grosseur moyenne des particules de l'additif pour l'absorption d'eau n'est pas supérieure à 100 µm et présente des pores présentant une largeur de pores de 2 à 5 Ångströms.

9. Système de polyuréthane à injecter selon l'une quelconque des revendications 1 à 8, **caractérisé en ce que** le composant isocyanate (B) présente un prépolymère, constitué par au moins un composant contenant du 4,4'-diphénylméthanediisocyanate et au moins un polyétherpolyol présentant une fonctionnalité moyenne de 1,8 à 3.

10. Système de polyuréthane à injecter selon l'une quelconque des revendications 1 à 8, **caractérisé en ce que** le composant isocyanate (B) contient au moins deux composants contenant 4,4'-MDI, dont au moins un est modifié par incorporation de groupes uretdione, carbamate, isocyanurate, carbodiimide ou allophanate.

11. Système de polyuréthane à injecter selon la revendication 1 à 10, **caractérisé en ce que** la fonctionnalité moyenne des composants réactifs utilisés est située entre 1,5 et 3,5, de préférence entre 1,8 et 2,5 et de manière particulièrement préférée entre 2,0 et 2,2.

12. Système de polyuréthane à injecter selon la revendication 1 à 11, **caractérisé en ce qu'**un colorant est en outre contenu.

13. Système de polyuréthane à injecter selon la revendication 12, **caractérisé en ce que** le système de polyuréthane à injecter comprend en outre un composant (C), contenant le colorant.

14. Procédé pour la réalisation d'une couche support en polyuréthane pour des pièces moulées, dans lequel les composants d'un système de polyuréthane à injecter selon la revendication 1 à 13 sont mélangés et injectés dans un moule.

15. Couche support en polyuréthane pour des pièces moulées, pouvant être obtenue selon le procédé selon la revendication 14.

16. Couche support selon la revendication 15, **caractérisée en ce que** l'allongement selon la norme DIN EN ISO 527 est supérieur à 200%, la résistance à la traction selon la norme DIN EN ISO 527 est supérieure à 7,5 N/mm² et la résistance à la propagation d'une déchirure amorcée selon la norme DIN 53515 est supérieure à 17 N/mm.

17. Couche support selon la revendication 15 ou 16, **caractérisée en ce que** l'émission de constituants volatils selon la norme VDA 278 est inférieure à 100 ppm, l'émission de constituants condensables selon la norme VDA 278 est inférieure à 20 ppm et l'émission selon la norme DIN 75201/B est inférieure à 1,5 ppm.

18. Utilisation de la couche support en polyuréthane selon la revendication 15 à 17 pour la fabrication de sièges, tableaux de bord, consoles, tablettes ou revêtement internes ou externes pour automobiles.
